# EUROPEAN PATENT SPECIFICATION

(11) **EP 1 103 429 B1**
(45) Date of publication and mention of the grant of the patent: **19.10.2005**
(21) Application number: 00500247.2
(22) Date of filing: 23.11.2000
(51) Int. Cl.: B60R 21/20

(54) **Fast fastening arrangement between an airbag module and a steering wheel**
Anordnung zum schnellen Befestigen eines Airbagmoduls an einem Lenkrad
Dispositif d'attache rapide d'un module de coussin gonflable sur un volant

(30) Priority: 23.11.1999 ES 9902965 U
(43) Date of publication of application: 30.05.2001
(73) Proprietor: Dalphi Metal Espana, S.A., 28006 Madrid (ES)
(72) Inventor: Gras Tous, Luis, 28006 Madrid (ES)
(74) Representative: Elzaburu Marquez, Alberto

(56) References cited:
- EP-A- 0 754 600
- EP-A- 0 926 039
- WO-A-99/44866
- DE-U- 29 602 630
- "SNAP-IN INFLATABLE RESTRAINT MODULE MOUNTING SYSTEM FOR STEERING WHEELS" RESEARCH DISCLOSURE,GB,INDUSTRIAL OPPORTUNITIES LTD. HAVANT, no. 403, 1 November 1997 (1997-11-01), page 825 XP000726737 ISSN: 0374-4353

## Description

### BACKGROUND OF THE INVENTION

The present specification refers to a fast fastening arrangement between an airbag module and a steering wheel, the purpose of which is to obtain a fastening of an airbag module on the frame directly the union being performed by means of a spring action.

Owing to the spring arrangement and that of the steering wheel contemplated in the invention, a simplified unblocking is attained, a screwdriver or tool being used for performing said unblocking, inserted through an access specially designed to this end.

The invention allows the airbag module to be positioned in a floating way in relation to the frame.

### FIELD OF APPLICATION

The invention will find application in the industry dedicated to the manufacture of motorcars, more specifically, in the industry dedicated to the manufacture of steering wheels, airbag modules and related elements.

### PRIOR ART

The applicant is aware of the existence at present of a plurality of methods of union applicable to an airbag to be fastened on a steering wheel, an invention being known, among others, which, for joining an airbag module to a steering wheel, uses springs housed in a frame joined on to the airbag module, the function of which is to retain an insert emerging from the steering wheel: exactly applied for as Model of Utility in Spain, under number 9801337 in the name of DALPHI METAL ESPAÑA, S. A., applicant in this file.

Showing an arrangement according to the preamble of claim 1.

DE-U-29602630 and document XP-000726737 "Snap-in Inflatable Restraint Module Mounting System for Steering Wheels" describe fastening arrangements between an airbag module and a steering wheel using springs placed in the steering wheel and cooperating projections placed in the airbag module.

It would be desirable to rely on a fast clipping of an airbag module with the steering wheel, contemplating a reduction of most of the parts, allowing the coupling and uncoupling operations to be performed in a fast and simplified way.

### SUMMARY OF THE INVENTION

The fast fastening arrangement between an airbag module and a steering wheel as proposed by the invention has the features mentioned in Claim 1. It offers the possibility of fastening an airbag module on the frame directly, that is to say, on the steering wheel frame, performing a fast clipping, in which the airbag module remains floating owing to its dimensional configuration, and only come into contact this fastening when the airbag module releases, retaining said module so that problems derived from vibrations are avoided.

In synthesis, the fast fastening arrangement between an airbag module and a steering wheel is configured having an elastic steel wire between two superimposed sheets or plates acting as a closing device of the airbag module, so that this is tied and hidden between the two superimposed sheets, except at two opposed points, through which it appears or emerges forming a bridge directed towards the interior of the steering wheel.

The mentioned bridges are faced to two projections emerging directly from the frame adopting a wedge shape.

### DESCRIPTION OF THE DRAWINGS

In order to complement this description and aid a better understanding of the characteristics of the invention, the appended set of drawings, which are a part of this specification, shows, by way of illustrative and non-limiting example, the following:
Figure 1 corresponds to a plan view of a steering wheel, into which the incorporation of the object of the invention is performed, related to a fast fastening arrangement between the airbag and the steering wheel.
Figure 2 shows a view through A-A of the object represented in figure 1.

### DESCRIPTION OF THE PREFERRED EMBODIMENT OF THE INVENTION

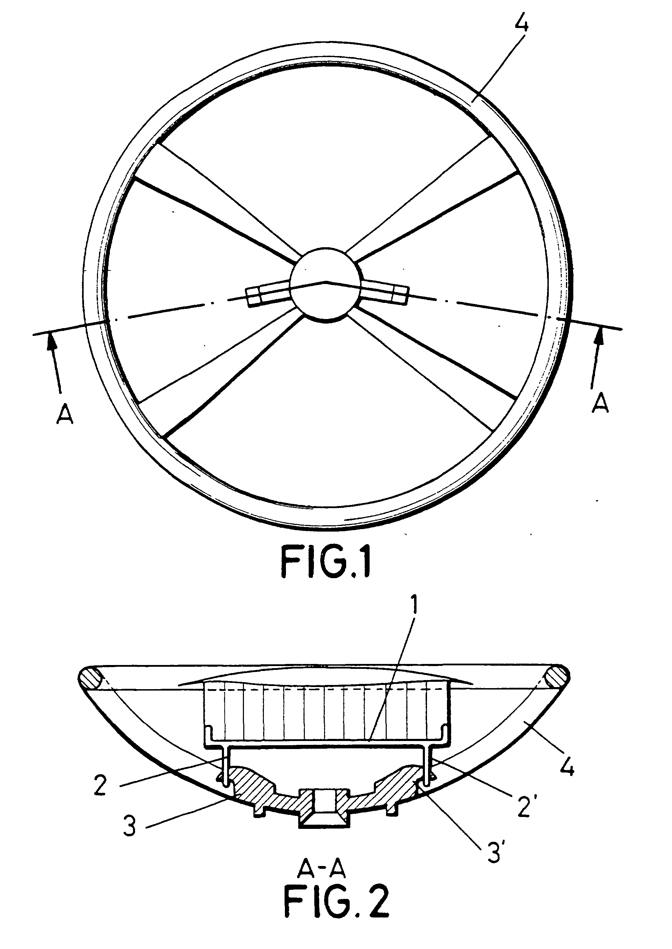

On a view of figures 1 and 2, it can be seen how the coupling and fast fastening arrangement applicable between the airbag module and the steering wheel, is constituted, and bearing in mind that it is about a fast clipping, in which the airbag module remains floating due to its dimensional configuration, this clipping coming only into contact when the airbag device releases, retaining said module so that problems derived from vibrations are avoided.

The fast fastening arrangement is configured having an elastic steel wire (1) between two superimposed sheets acting as a closing device of the airbag module, so that it remains tied and hidden between them, excepting two opposed points or spots, through which it appears forming two bridges (2) and (2') directed towards the interior of the steering wheel, the bridges (2) and (2') being faced to two projections (3) and (3') directly emerging from the frame (4) of the steering wheel, adopting a wedge configuration.

It is to be pointed out that the assembly is performed by exerting pressure on the airbag module, so that the elastic wire (1) opens towards the exterior, the module remaining floating due to its dimensional shape, and coming into contact only when the airbag releases, moment at which said elastic wire is exerting retention and opposition to the distmantlement of the fastening arrangement.

Also, it is to be noted that the invention has an access from the outside, through which, by means of a screwdriver or similar tool, the resistance of the spring can be overcome, and allowing the coupling to be unblocked, and, therefore, the module extraction.

## Claims

1. Fast fastening arrangement between an airbag module and a steering wheel, comprising a member (1) situated in the airbag module and a counter member situated in the hub of the steering wheel whereby said member (1), made of a resilient wire, is fixed to the interior side of the lower closing plate of the airbag module and includes two exterior bridges (2, 2') for cooperating with the counter member and said counter member is formed by two wedge shaped projections (3, 3') emerging from the frame of the steering wheel **characterized in that** the airbag module remains floating when mounted to the steering wheel due to its dimensional shape and the exterior bridges (2, 2') only comes in contact with the wedges (3, 3') when the airbag releases, and **in that** there is an opening in the steering wheel allowing the access of a tool for unblocking the fastening by way of a lateral pressure on one of the bridges (2, 2').

## Patentansprüche

1. Anordnung zum schnellen Befestigen eines Airbag-Moduls an einem Lenkrad, mit einem im Airbag-Modul angeordneten Element (1) und einem in der Nabe des Lenkrads angeordneten Gegenelement, wobei das Element (1). das aus einem Federdraht hergestellt ist. an der Innenseite der unteren Verschlussplatte des Airbag-Moduls befestigt ist und zwei äußere Brücken (2. 2') zum Zusammenwirken mit dem Gegenelement aufweist und wobei das Gegenelement durch zwei keilförmige Vorsprünge (3, 3') gebildet ist, die vom Rahmen des Lenkrads vorstehen, **dadurch gekennzeichnet dass** das Airbag-Modul aufgrund seiner Abmessung und Form schwimmend verbleibt, wenn es am Lenkrad befestigt ist. und die äußeren Brücken (2. 2') nur dann mit den Keilen (3, 3') in Kontakt gelangen, wenn der Airbag auslöst. und dass im Lenkrad eine Öffnung vorhanden ist. die den Zugang eines Werkzeugs zum Entriegeln der Befestigung mit Hilfe eines seitlichen Druckes auf eine der Brücken (2, 2') ermöglicht.

## Revendications

1. Agencement de fixation rapide entre un module de sac gonflable (airbag) et un volant de direction, comprenant un organe (1) situé dans le module de sac gonflable et un contre-organe situé dans le moyeu du volant de direction, dans lequel agencement ledit organe (1), réalisé en fil métallique élastique, est fixé à la face intérieure de la plaque inférieure de fermeture du module de sac gonflable et comprend deux ponts ou chevauchements extérieurs (2, 2') destinés à coopérer avec le contre-organe et ledit contre-organe est formé par deux saillies (3, 3') en forme de coin et émergeant du cadre du volant de direction, **caractérisé en ce que** le module de sac gonflable reste flottant lorsqu'il est monté sur le volant de direction du fait de sa forme dimensionnelle et du fait que les ponts ou chevauchements extérieurs (2, 2') viennent uniquement en contact avec les coins (3, 3') lorque le sac gonflable se déploie, et **en ce qu'**il existe une ouverture dans le volant de direction permettant l'accès d'un outil pour débloquer la fixation en exerçant une pression latérale sur l'un des ponts ou chevauchements (2, 2').
